# FASCICULE DE BREVET EUROPEEN

(11) **EP 0 820 960 B1**
(45) Date de publication et mention de la délivrance du brevet: **20.09.2000**
(21) Numéro de dépôt: 97401533.1
(22) Date de dépôt: 01.07.1997
(51) Int. Cl.: C01B 21/04, C01B 23/00, B01D 53/04

(54) **Elimination de O2 et/ou CO d'un gaz inerte par adsorption sur oxyde métallique poreux**
Entfernung von O2 und/oder CO aus einem inerten Gas durch Adsorption an porösem Metalloxid
Removal of O2 and/or CO from inert gas using adsorption on porous metal oxide

(30) Priorité: 22.07.1996 FR 9609177
(43) Date de publication de la demande: 28.01.1998
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny Le Bretonneux (FR)
(74) Mandataire: Le Moenner, Gabriel

(56) Documents cités:
- EP-A- 0 240 270
- EP-A- 0 350 656
- EP-A- 0 662 595
- US-A- 4 746 332
- US-A- 5 536 302

## Description

La présente invention concerne un procédé et un dispositif d'épuration d'un gaz inerte chimiquement, en l'une au moins de ses impuretés oxygène et monoxyde de carbone.

Les gaz inertes, tels l'azote et les gaz rares, à savoir l'hélium, le néon, l'argon, le krypton, le xénon et leurs mélanges, sont couramment mis en oeuvre dans de nombreuses industries, en particulier l'industrie électronique. Cette dernière tout particulièrement, requiert lesdits gaz inertes aussi purs que possible, et, notamment, débarrassés de leurs impuretés oxygène (O₂) et monoxyde de carbone (CO).

Or, ces gaz inertes, habituellement produits par distillation cryogènique, contiennent des impuretés de type oxygène (O₂) et/ou monoxyde de carbone (CO), en des proportions généralement supérieures à quelques centaines de ppb (partie par milliard en volume).

Par conséquent, lorsque l'on souhaite obtenir un gaz inerte substantiellement exempt de ses impuretés O₂ et/ou CO, il est indispensable de soumettre ce gaz à une épuration afin d'éliminer lesdites impuretés.

Un certain nombre de procédés d'épuration de gaz inertes sont connus de l'art antérieur.

Ainsi, le brevet US-A-3,996,028 décrit un procédé de purification de l'argon par passage de cet argon au travers d'une zéolite synthétique du type A qui permet l'adsorption de l'oxygène; ladite adsorption étant réalisée à une température comprise entre -186°C et -133°C.

Le brevet US-5,106,399 décrit quant à lui un procédé de purification de l'argon, en particulier de l'argon liquide, utilisant un tamis moléculaire; les impuretés oxygène, hydrogène et/ou monoxyde de carbone contenues dans le flux à purifier étant adsorbées préférentiellement sur un matériau constitué de billes d'alumine-silice supportant du nickel en pourcentage élevé.

Par ailleurs, le document US-A-5,536,302 décrit un procédé pour éliminer les traces d'oxygène d'un gaz inerte par adsorption sur un adsorbant constitué d'un support imprégné de 10 à 90% d'un oxyde métallique alcalin ou alcalino-terreux, ladite adsorption étant réalisée à température ambiante.

Toutefois, ces différents procédés connus présentent de nombreux inconvénients, notamment ils ne permettent pas d'épurer les gaz inertes, tels l'azote et les gaz rares, en l'une au moins de leurs impuretés oxygène et monoxyde de carbone, à un niveau de l'ordre du ppb (partie par milliard en volume).

Il est donc nécessaire de développer de nouveaux procédés permettant d'arriver à de tels seuils d'épuration desdits gaz inertes en leurs impuretés oxygène et/ou monoxyde de carbone.

Par ailleurs, les procédés connus sont limités du point de vue du débit du gaz inerte à épurer, c'est-à-dire de la quantité dudit gaz inerte pouvant être épurée pendant une période de temps donnée. Ainsi, le seuil de débit maximal atteint par les procédés classiques se situe généralement aux environs de quelques centaines de Nm³/h.

Il est donc nécessaire de développer des procédés permettant d'obtenir des débits supérieurs en gaz inertes substantiellement épurés.

En outre, certains procédés d'épuration connus, présentent aussi l'inconvénient d'être mis en oeuvre à des températures très basses, souvent inférieures à -100°C; ce qui requiert une isolation thermique parfaite du dispositif d'épuration, afin d'éviter toute entrée de chaleur, et donc engendre une augmentation importante des coûts de production.

Ainsi, le document EP-A-662595 enseigne la purification d'azote à l'état liquide, à une température comprise entre -150°C et -196°C, par adsorption des impuretés CO, H₂ et O₂ sur un adsorbant choisi parmi les zéolites naturelles ou synthétiques et les oxydes métalliques poreux, notamment un oxyde mixte de cuivre et de manganèse, telle une hopcalite. Ce document préconise de réaliser la purification directement sur l'azote liquide pour éviter les pertes de charge.

Afin de minimiser ces coûts de production, il est donc souhaitable de concevoir un procédé d'épuration des gaz inertes pouvant être mis en oeuvre à une température supérieure ou égale à -40°C, et utilisant un adsorbant efficace, courant et peu onéreux.

En résumé, l'invention a pour but de proposer un procédé permettant d'obtenir un gaz inerte chimiquement, tels l'azote ou les gaz rares, substantiellement épuré en ses impuretés oxygène et/ou monoxyde de carbone:
- qui soit aisé à mettre en oeuvre du point de vue industriel et de coût raisonnable,
- permettant d'obtenir un gaz inerte chimiquement de très haute pureté, c'est-à-dire contenant au maximum environ 1 ppb ± 1 d'oxygène et/ou de monoxyde de carbone (CO),
- permettant d'atteindre des débits de gaz épuré supérieurs aux débits atteints par les méthodes classiques,
- mettant en oeuvre des adsorbants peu onéreux et facilement accessibles,
- et pouvant être mis en oeuvre à une température supérieure ou égale à -40°C et, de préférence, à température ambiante.

L'invention consiste alors en un procédé d'épuration d'un gaz inerte chimiquement, contenant l'une au moins des impuretés O₂ et CO, en l'une au moins desdites impuretés caractérisé en ce que:
a) on fait passer le gaz à épurer au travers d'un adsorbant comprenant au moins un oxyde métallique poreux d'au moins un métal de transition, ledit gaz ayant une température supérieure ou égale à - 40°C, et on élimine l'une au moins desdites impuretés CO et/ou O₂ par adsorption sur ledit adsorbant,
b) on récupère un gaz substantiellement épuré en l'une au moins des impuretés O₂ et CO.

De préférence, le gaz est épuré à une température comprise entre -40°C et +50°C.

Préférentiellement, le gaz est épuré à température ambiante; c'est-à-dire à une température comprise entre environ +5°C et +50°C.

Le procédé selon l'invention est particulièrement adapté à l'épuration d'azote.

Avantageusement, l'adsorbant est constitué d'un oxyde mixte d'au moins deux métaux de transition.

De préférence, l'adsorbant comprend un oxyde mixte de cuivre et de manganèse, telle une hopcalite.

Dans ce cas, l'adsorbant comprendra de préférence de 40 à 70% en poids d'un oxyde de manganèse et de 25 à 50% en poids d'un oxyde de cuivre.

Préférentiellement, on régénère l'adsorbant postérieurement à l'adsorption de l'impureté.

Selon un mode préféré de l'invention l'adsorbant est réparti en deux zones distinctes, l'une de ces zones permettant l'adsorption de l'impureté tandis que l'autre est régénérée.

Généralement, le flux à épurer est à une pression de 1 à 30 bars absolus, de préférence, de l'ordre de 3 à 10 bars absolus.

La présente invention concerne également un dispositif pour la mise en oeuvre du procédé selon l'invention, caractérisé en ce qu'il comprend une source d'un gaz inerte chimiquement à épurer reliée à l'entrée d'au moins une zone d'adsorption comportant un adsorbant pour l'adsorption de l'une au moins des impuretés O₂ et CO, ledit adsorbant comprenant au moins un oxyde métallique poreux d'au moins un métal de transition, la sortie de la zone d'adsorption étant pourvue d'une conduite de raccordement débouchant dans une cuve de stockage ou dans un poste d'utilisation du gaz épuré en l'une au moins desdites impuretés.

Optionnellement, au moins un moyen de chauffage du gaz à épurer est aménagé entre la source de gaz inerte à épurer et l'entrée de la zone d'adsorption.

Avantageusement, la source de gaz inerte à épurer est une unité de production d'azote.

Préférentiellement, la zone d'adsorption comprend deux réacteurs travaillant alternativement, c'est-à-dire que l'un des réacteurs travaille en épuration pendant que l'autre subit une régénération.

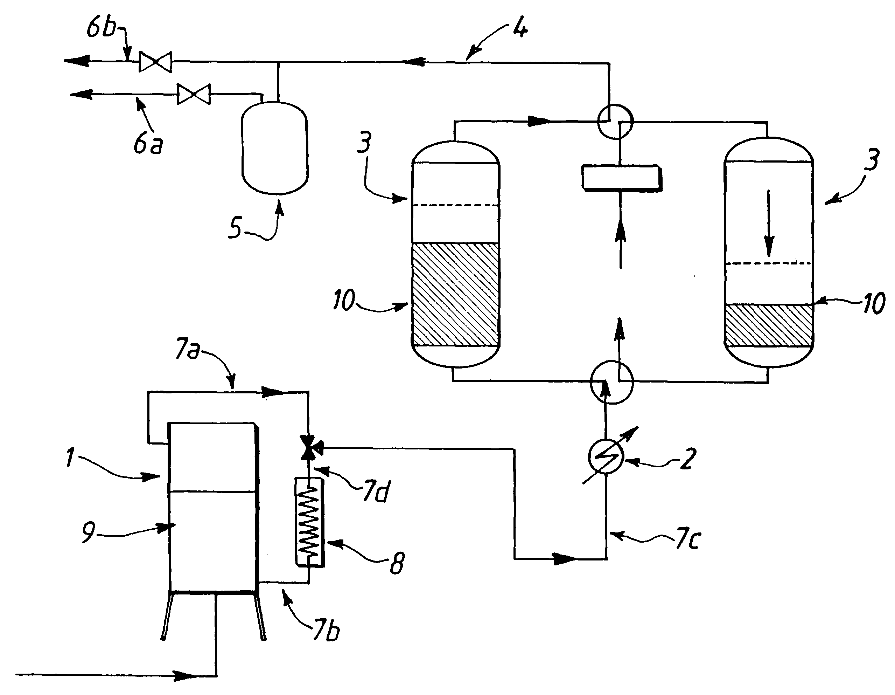

Un dispositif pour la mise en oeuvre du procédé selon l'invention, va maintenant être décrit plus en détail en référence à la figure annexée.

La figure unique annexée représente un dispositif de mise en oeuvre du procédé selon l'invention, comprenant une source d'azote à épurer (9) en ses impuretés O₂ et/ou CO, consistant en une cuve de stockage (1) contenant de l'azote liquide et/ou gazeux. Une conduite (7a), (7c) permet d'acheminer l'azote gazeux depuis le ciel gazeux de la cuve de stockage (1) vers un réchauffeur (2) permettant de porter l'azote gazeux à la température voulue, par exemple à la température ambiante, avant de l'acheminer jusqu'aux réacteurs (3) contenant l'adsorbant (10) de type hopcalite.

Une conduite (7b) permet d'acheminer l'azote liquide contenu dans la cuve de stockage (1) jusqu'à un vaporiseur atmosphérique (8); l'azote gazeux obtenu après vaporisation est ensuite amené, via les conduites (7d) et (7c), jusqu'au réchauffeur (2).

A la sortie des réacteurs (3), l'azote gazeux épuré en l'une au moins de ses impuretés O₂ et CO est amené via une conduite (4) jusqu'à une capacité tampon (5) de stockage d'azote gazeux épuré, puis vers son lieu d'utilisation (non représenté) via une conduite (6a).

Toutefois, la présence d'une capacité tampon (5) de stockage d'azote gazeux épuré n'est pas nécessaire; l'azote gazeux épuré peut également être amené directement à son lieu d'utilisation (non représenté) via les conduites (4) et (6b).

Ainsi que représenté sur la figure annexée, on utilise de préférence non pas un, mais deux réacteurs (3) contenant chacun l'adsorbant de type hopcalite. Ainsi, il est possible de faire travailler les réacteurs de façon alternative, c'est-à-dire que pendant que l'un des réacteurs travaille en épuration, l'autre peut être régénéré.

La régénération est effectuée de façon classique, par exemple, conformément à l'exemple 2 ci-après.

L'efficacité du procédé selon l'invention va maintenant être démontrée à l'aide d'exemples illustratifs, mais non limitatifs.

Dans les exemples ci-après, l'adsorbant mis en oeuvre est une hopcalite commercialisée soit par la société Dräger et comprenant environ 63% de MnO₂ et environ 37% de CuO, soit par la société Molecular Products et comprenant 60% en poids environ de MnO₂ et 40% en poids environ de CuO.

L'impureté monoxyde de carbone (CO) a été mesurée au moyen d'un chromatographe RGA3 commercialisé par la société Trace Analytical. L'impureté oxygène a été mesurée en continu au moyen d'un analyseur OSK, commercialisé par la société Osaka Sanso Kogyo Ltd. Le seuil de détection du chromatographe RGA3 est de 1 ppb ± 1 (partie par milliard en volume) pour le monoxyde de carbone. Le seuil de détection de l'analyseur OSK est de 1 ppb ± 1 pour l'oxygène.

### Exemple 1:

Afin de démontrer l'efficacité du procédé de l'invention, un flux d'azote gazeux contenant approximativement 4 ppm (partie par million) d'oxygène (O₂)et un peu moins de 2 ppm de monoxyde de carbone (CO) a été épuré au travers d'un adsorbant comprenant un oxyde métallique de type hopcalite; l'épuration étant effectuée à température ambiante, c'est-à-dire à une température d'environ 20°C.

Le dispositif utilisé à cette fin est analogue à celui décrit ci-dessus.

Deux essais successifs ont été réalisés, ceux-ci étant séparés par une phase de régénération à une température d'environ 250°C et au moyen d'un mélange H₂/N₂ (5%).

Les résultats obtenus ont été intégrés dans le tableau I suivant:

**TABLEAU I**

| | | | | A L'ENTREE (ppm) | | A LA SORTIE (ppb) | |
|---|---|---|---|---|---|---|---|
| ESSAIS | TEMPERATURE | Pb | U (m/s) | CO | O₂ | CO | O₂ |
| 1 | 20°C | 7 | 0,15 | 1,6 ppm | 4 ppm | ≃ 1 ppb | ≃ 1 ppb |
| 2 | 20°C | 7 | 0,15 | 1,8 ppm | 4 ppm | 50 ppb | ≃ 1 ppb |
| Pb est la pression exprimée en bar absolus. | | | | | | | |
| U (m/s) est la vitesse linéaire du gaz au travers du réacteur exprimée en m.s⁻¹. | | | | | | | |

Comme on peut le constater sur le tableau I précédent, après le premier cycle d'épuration, l'azote épuré comprend environ 1 ppb de CO et O₂; ces résultats sont donc tout à fait satisfaisants, et démontrent l'efficacité de l'hopcalite dans l'épuration de l'azote gazeux en ses polluants O₂ et CO.

Après le deuxième cycle d'épuration, on constate que l'efficacité de l'adsorbant de type hopcalite est constante et maximale en ce qui concerne l'épuration de l'azote en son impureté oxygène. Par contre, le résultat obtenu pour le CO est moins satisfaisant, mais permet néanmoins d'éliminer la majeure partie du CO contenue dans l'azote jusqu'à un niveau de l'ordre de quelques dizaines de ppb.

En fait, le résultat obtenu pour le CO après l'essai 2 (50 ppb) s'explique par une mauvaise régénération de l'adsorbant lors de la phase de régénération.

Afin de vérifier cette hypothèse de mauvaise régénération de l'adsorbant, une deuxième série de tests a été effectuée en suivant le protocole de régénération donné dans l'exemple 2.

### Exemple 2:

L'adsorbant de type hopcalite mis en oeuvre dans l'exemple 1 a été régénéré une nouvelle fois en appliquant le protocole de régénération suivant:
- un balayage à l'azote gazeux chaud (par exemple à 250°C) pour réchauffer l'adsorbeur;
- un balayage réactif à l'aide d'un mélange H₂/N₂ (4%) est effectué à un débit de 0,5 Nm³/h et à une température de 250°C pendant 2h, puis 300°C pendant 4h;
- un balayage sous azote gazeux est opéré ensuite à un débit de 0,5 Nm³/h et à une température de 300°C pendant 16h;
- enfin, l'adsorbant est refroidi à l'aide d'azote gazeux (à température ambiante) jusqu'à la température ambiante; temps nécessaire: 4h30.

Le balayage réactif à l'aide du mélange réducteur H₂/N₂ (2 à 5%) permet de réactiver l'hopcalite. Toutefois, cette réactivation de l'hopcalite engendre également une formation d'eau, qu'il faut ensuite éliminer grâce au balayage à l'aide d'azote chaud (300°C); ceci permet également d'évacuer l'hydrogène résiduel issu du mélange de réactivation.

### Exemple 3:

Après régénération (voir exemple 2), l'adsorbant (hopcalite) est soumis à de nouveaux essais d'épuration; les résultats sont consignés dans le tableau II ci-après.

**TABLEAU II**

| ESSAI | TEMPERATURE | Pb | U (m/s) | A L'ENTREE | | A LA SORTIE | | DUREE |
|---|---|---|---|---|---|---|---|---|
| | | | | CO | O₂ | CO | O₂ | 210 h |
| 3 | 20°C | 7 | 0,10 | 1,7 ppm à 2,5 ppm | 4,6 ppm à 7,6 ppm | N. D. | N. D. | |
| N. D. = Non Détecté. | | | | | | | | |

L'essai 3 a été réalisé en utilisant environ 90 g d'hopcalite, et en respectant les conditions opératoires données dans le tableau II.

Le flux de composé inerte chimiquement à épurer est de l'azote contenant de 1,7 à 2,5 ppm de monoxyde de carbone (CO) et de 4,6 à 7,6 ppm d'oxygène (O₂).

Comme on peut le constater à la lecture des résultats consignés dans le tableau II, après 210 heures d'épuration, le flux d'azote à la sortie contient des quantités de O₂ et CO non détectables par les analyseurs classiques ayant des seuils de détection de l'ordre du ppb.

Cet essai 3 confirme donc, d'autre part, que l'hopcalite permet de piéger très efficacement les impuretés O₂ et CO contenues dans un flux d'un composé inerte (ici de l'azote) à un niveau inférieur ou égal au ppb, et d'autre part, que le résultat obtenu lors de l'essai 2 (exemple 1) pour le CO (50 ppb) est dû à une mauvaise régénération de l'hopcalite.

L'élimination de CO et O₂ par adsorption, et non par catalyse, a été confirmée à l'aide d'un analyseur à intrarouge, tel que celui commercialisé par la société MAIHAK sous l'appellation UNOR 6N (seuil de détection pour le CO₂: environ 10 ppb).

L'analyse de la teneur en CO₂ a été effectuée pendant toute la durée des essais. A aucun moment, l'analyseur n'a détecté une augmentation de la teneur en CO₂ synonyme d'une oxydation du CO, et donc d'une catalyse oxydative.

Le monoxyde de carbone et l'oxygène sont donc bien éliminés par adsorption.

### Exemple 4:

Cet exemple vise à démontrer l'efficacité de l'adsorbant de type hopcalite dans l'épuration d'un flux d'azote en son impureté O₂ en comparaison avec un adsorbant de type zéolite, utilisé dans les procédés classiques.

Dans ce but, on remplace l'hopcalite par un adsorbant de type zéolite (100 g), puis on applique le protocole décrit en exemple 3 (les conditions opératoires sont donc identiques).

Les résultats sont consignés dans le tableau III ci-après.

**TABLEAU III**

| ESSAI | TEMPERATURE | Pb | U (m/s) | A L'ENTREE | A LA SORTIE | DUREE |
|---|---|---|---|---|---|---|
| | | | | O₂ | O₂ | |
| 4 | 20°C | 7 | 0,10 | 4,6 ppm | 1 ppm | 0,5 h |
| 5 | 20°C | 7 | 0,10 | 4,6 ppm | 4,6 ppm | 33 h |

On constate qu'après 33 heures d'épuration, le flux d'azote à la sortie contient encore une quantité de O₂ sensiblement égale à celle contenue dans le flux d'azote à épurer.

Donc, dans les mêmes conditions de pression, débit et température, la zéolite ne permet pas d'arrêter l'oxygène contenue dans un flux gazeux d'un composé inerte chimiquement, tel l'azote, alors que l'hopcalite permet une épuration inférieure ou égale au ppb.

## Revendications

1. Procédé d'épuration d'un gaz inerte chimiquement, contenant l'une au moins des impuretés O₂ et/ou CO, en l'une au moins desdites impuretés, caractérisé en ce que:
a) on fait passer le gaz à épurer au travers d'un adsorbant comprenant au moins un oxyde métallique poreux d'au moins un métal de transition, ledit gaz ayant une température supérieure ou égale à -40°C, et on élimine au moins l'une desdites impuretés CO et/ou O₂ par adsorption sur ledit adsorbant,
b) on récupère un gaz substantiellement épuré en l'une au moins des impuretés O₂ et CO.

2. Procédé selon la revendication 1, caractérisé en ce que le flux est épuré à une température comprise entre -40°C et +50°C.

3. Procédé selon l'une des revendications 1 ou 2, caractérisé en ce que le flux est épuré à température ambiante.

4. Procédé selon l'une des revendications 1 à 3, caractérisé en ce que le flux à épurer est essentiellement constitué d'azote gazeux.

5. Procédé selon la revendication 1, caractérisé en ce que l'adsorbant est constitué d'un oxyde mixte d'au moins deux métaux de transition.

6. Procédé selon l'une des revendications 1 ou 5, caractérisé en ce que l'adsorbant comprend un oxyde mixte de cuivre et de manganèse, telle une hopcalite.

7. Procédé selon la revendication 6, caractérisé en ce que l'adsorbant comprend de 40 à 70% en poids d'un oxyde de manganèse et de 25 à 50% en poids d'un oxyde de cuivre.

8. Procédé selon la revendication 7, caractérisé en ce que postérieurement à l'adsorption de l'impureté, on régénère l'adsorbant.

9. Procédé selon la revendication 8, caractérisé en ce que l'adsorbant est réparti en deux zones distinctes, l'une de ces zones permettant l'adsorption de l'impureté tandis que l'autre est régénérée.

10. Procédé selon l'une des revendications 1 à 4, caractérisé en ce que le flux à épurer est à une pression de 1 à 30 bars absolus, de préférence, de l'ordre de 3 à 10 bars absolus.

## Claims

1. Process for purifying a chemically inert gas containing at least one of the impurities O₂ and/or CO of at least one of the said impurities, characterized in that:
a) the gas to be purified is passed through an adsorbent comprising at least one porous metal oxide of at least one transition metal, the said gas having a temperature greater than or equal to -40°C, and at least one of the said impurities, CO and/or O₂, is removed by adsorption, and
b) a gas substantially purified of at least one of the impurities O₂ and CO is recovered.

2. Process according to Claim 1, characterized in that the stream is purified at a temperature of between -40°C and +50°C.

3. Process according to either of Claims 1 and 2, characterized in that the stream is purified at ambient temperature.

4. Process according to one of Claims 1 to 3, characterized in that the stream to be purified consists essentially of gaseous nitrogen.

5. Process according to Claim 1, characterized in that the absorbent consists of a mixed oxide of at least two transition metals.

6. Process according to either of Claims 1 and 5, characterized in that the adsorbent comprises a mixed oxide of copper and manganese, such as a hopcalite.

7. Process according to Claim 6, characterized in that the adsorbent contains from 40 to 70% by weight of a manganese oxide and from 25 to 50% by weight of a copper oxide.

8. Process according to Claim 7, characterized in that after the adsorption of the impurity the adsorbent is regenerated.

9. Process according to Claim 8, characterized in that the adsorbent is divided into two distinct zones, one of these zones allowing the impurity to be adsorbed while the other is regenerated.

10. Process according to one of Claims 1 to 4, characterized in that the stream to be purified is at a pressure of from 1 to 30 bars absolute, preferably of the order of from 3 to 10 bars absolute.

## Patentansprüche

1. Verfahren zur Befreiung eines mindestens eine der Verunreinigungen O₂ und/oder CO enthaltenden chemisch inerten Gases von mindestens einer dieser Verunreinigungen, dadurch gekennzeichnet, daß man:
a) das zu reinigende Gas bei einer Temperatur von mindestens -40°C über ein Adsorptionsmittel leitet, das mindestens ein poröses Metalloxid mindestens eines Übergangsmetalls enthält, und mindestens eine der Verunreinigungen CO und/oder O₂ adsorptiv abtrennt und
b) ein von mindestens einer der Verunreinigungen O₂ und CO weitgehend befreites Gas zurückgewinnt.

2. Verfahren nach Anspruch 1, dadurch gekennzeichnet, daß man den Strom bei einer Temperatur zwischen -40°C und +50°C reinigt.

3. Verfahren nach Anspruch 1 oder 2, dadurch gekennzeichnet, daß man den Strom bei Raumtemperatur reinigt.

4. Verfahren nach einem der Ansprüche 1 bis 3, dadurch gekennzeichnet, daß der zu reinigende Strom im wesentlichen aus gasförmigem Stickstoff besteht.

5. Verfahren nach Anspruch 1, dadurch gekennzeichnet, daß das Adsorptionsmittel aus einem Mischoxid aus mindestens zwei Übergangsmetallen besteht.

6. Verfahren nach Anspruch 1 oder 5, dadurch gekennzeichnet, daß das Adsorptionsmittel ein Mischoxid von Kupfer und Mangan, wie einen Hopcalit, enthält.

7. Verfahren nach Anspruch 6, dadurch gekennzeichnet, daß das Adsorptionsmittel 40 bis 70 Gew.-% eines Manganoxids und 25 bis 50% eines Kupferoxids enthält.

8. Verfahren nach Anspruch 7, dadurch gekennzeichnet, daß man das Adsorptionsmittel nach der Adsorption der Verunreinigung regeneriert.

9. Verfahren nach Anspruch 8, dadurch gekennzeichnet, daß man das Adsorptionsmittel in zwei verschiedene Zonen unterteilt, von denen eine die Adsorption der Verunreinigung ermöglicht, während die andere regeneriert wird.

10. Verfahren nach einem der Ansprüche 1 bis 4, dadurch gekennzeichnet, daß der zu reinigende Strom unter einem Druck von 1 bis 30 bar absolut, vorzugsweise etwa 3 bis 10 bar absolut, steht.
